# EUROPEAN PATENT APPLICATION

(11) **EP 4 537 650 A1**
(43) Date of publication of application: **16.04.2025**
(21) Application number: 24203909.7
(22) Date of filing: 01.10.2024
(51) Int. Cl.: A01D 34/00

(54) **FUNCTION ADDING DEVICE AND WORK MACHINE**

(30) Priority: 10.10.2023 JP 2023174927
(71) Applicant: Yamabiko Corporation, Ohme-shi, Tokyo 198-8760 (JP)
(72) Inventor: KANEKO, Kazuhiro, Ohme-shi, Tokyo, 1988760 (JP); NAKANO, Kenji, Ohme-shi, Tokyo, 1988760 (JP); ISHIHIRA, Daisuke, Ohme-shi, Tokyo, 1988760 (JP); UENO, Takahiro, Ohme-shi, Tokyo, 1988760 (JP)
(74) Representative: Winter, Brandl - Partnerschaft mbB

(57) **Abstract**

According to an embodiment of the present disclosure, a function adding device is provided that adds a function to a work machine used outdoors. The function addition device comprises a housing, a control circuit, and a wiring. The housing includes a top surface portion, side portions, and a bottom surface portion in which a hole portion is formed. The control circuit is placed inside the housing and is configured to perform the function for the work machine. The wiring connects the work machine and the control circuit via the hole portion.

## Description

### CROSS REFERENCE TO RELATED APPLICATIONS

The present application claims priority under 35 U.S.C. §119 to Japanese Patent Application No. 2023-174927, filed October 10, 2023, the contents of which are incorporated herein by reference in their entirety.

### BACKGROUND

The present disclosure relates to a function adding device and a work machine.

### RELATED ART

JP2023-003238 A discloses a work machine.

This work machine will be described. In the work machine, a front side air intake and a rear side air intake are provided on both right and left side surfaces of a battery housing, respectively. A plate-shaped external member is detachably attached to both right and left side surfaces of the battery housing to cover openings of the front side air intake and the rear side air intake. A front side communication part and a rear side communication part are provided on both right and left side surfaces of the battery housing, respectively. The front side communication part and the rear side communication part are groove-shaped, respectively, and allow the front side air intake and the rear side air intake which are covered by the external member to communicate with the outside air.

However, in the work machine disclosed in JP2023-003238 A, a special processing is required to improve a waterproof property, and thus it is costly and not economical.

In view of the above circumstances, the present disclosure aims to provide a function adding device and a work machine, etc., which can improve a waterproof property more economically than before.

According to an aspect of the present disclosure, a function adding device is provided that adds a function to a work machine used outdoors. The function adding device comprises a housing, a control circuit, and a wiring. The housing includes a top surface portion, side portions, and a bottom surface portion in which a hole portion is formed. The control circuit is placed inside the housing and is configured to perform the function for the work machine. The wiring connects the work machine and the control circuit via the hole portion.

According to such an aspect, it is possible to improve a waterproof property more economically than before.

### BRIEF DESCRIPTION OF DRAWINGS

FIG. 1 shows an example of the overall configuration of a vehicle system 1.
FIG. 2 shows an example of a configuration of a grass mower 10 and a remote controller 20.
FIG. 3 is a perspective view of the vehicle system 1.
FIG. 4 is a front view of the vehicle system 1.
FIG. 5 is a side view of the vehicle system 1.
FIG. 6 is a rear view of the vehicle system 1.
FIG. 7 is a plan view of the vehicle system 1.
FIG. 8 is an enlarged view of a housing support portion 31 and a housing 46 viewed from above.
FIG. 9 is a perspective view showing the appearance of the housing 46.
FIG. 10 is a plan view showing a bottom surface portion 63 of the housing 46.
FIG. 11A and FIG. 11B show a configuration of a dustproof member 80, respectively.
FIG. 12 shows an opening and closing mechanism of a function adding device 40.
FIG. 13 shows an opening and closing mechanism of a function adding device 40.
FIG. 14 shows an opening and closing mechanism of a function adding device 40.

### DETAILED DESCRIPTION

Hereinafter, an embodiment of the present disclosure will be described with reference to the drawings. Various features described in the embodiment below can be combined with each other.

### 1. Overall configuration of a vehicle system 1

In Section 1, the overall configuration of a vehicle system 1 will be described.

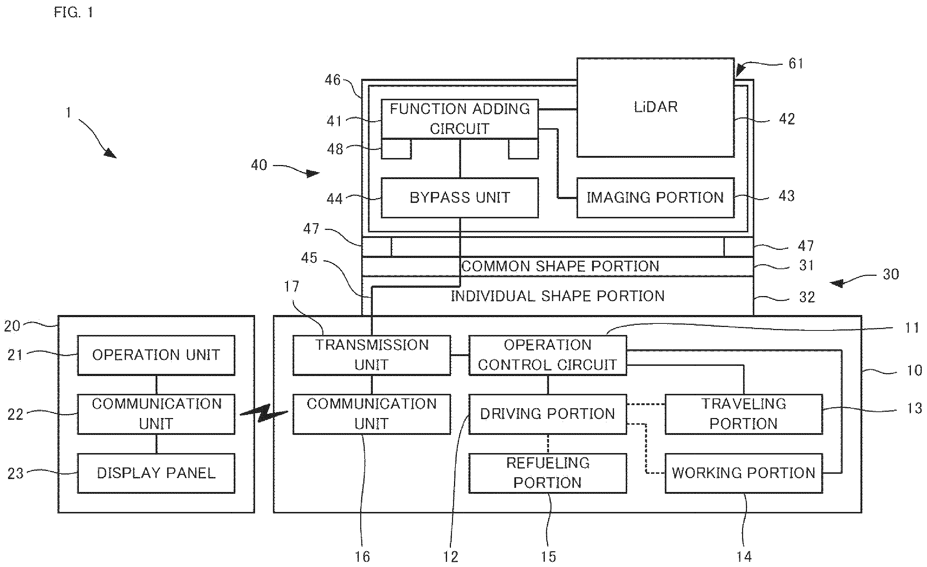

FIG. 1 shows an example of the overall configuration of the vehicle system 1. The vehicle system 1 is a system for causing a vehicle to travel and perform a predetermined work. The predetermined work is, for example, a mowing work in a predetermined area such as a field. The vehicle system 1 comprises a grass mower 10 (work machine), a remote controller 20, a support member 30, and a function adding device 40. The grass mower 10 and the remote controller 20 in the vehicle system 1 are existing products and are configured as the vehicle system 1 by mounting the support member 30 and the function adding device 40 afterward. The support member 30 is assumed to be a part of the configuration of the function adding device 40. The function adding device 40 is a device that adds a function to the work machine used outdoors. In the present embodiment, the work machine is assumed to be the grass mower 10. Hereinafter, a description will be given of the existing products first.

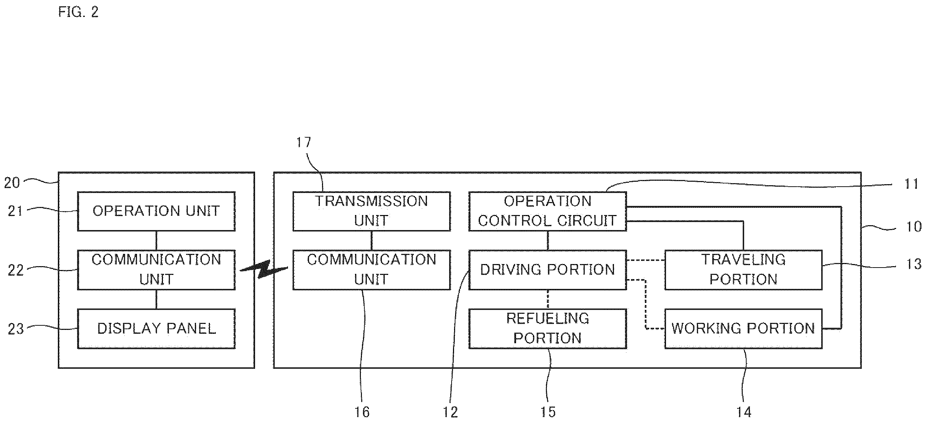

FIG. 2 shows an example of a configuration of the grass mower 10 and the remote controller 20. Here, the grass mower 10 is assumed to be an unmanned machine. The unmanned machine is a work machine that does not have a person on board and is operated by a person remotely. The grass mower 10 has a traveling function and a working function and performs a mowing work while traveling. The remote controller 20 is a controller that has a wireless communication function and that remotely controls the grass mower 10. The grass mower 10 comprises an operation control circuit 11, a driving portion 12, a traveling portion 13, a working portion 14, a refueling portion 15, a communication unit 16, and a transmission unit 17. The remote controller 20 comprises an operation unit 21, a communication unit 22, and a display panel 23.

The operation control circuit 11 is a circuit that controls operations of each portion of the grass mower 10. The circuit is an electronic component in which an electric component is placed on a printed circuit board. The circuit may include both electronic and electrical circuits. The driving portion 12 is a portion that generates driving force. In the grass mower 10, the driving portion 12 allows an engine that rotates by burning fuel to generate electric power, charges a battery by using the generated electric power, and generates driving force by rotating a motor using the charged electric power. The traveling portion 13 is mechanically connected to the driving portion 12 via gears, etc., and is a portion that is supplied with driving force from the driving portion 12 to allow the grass mower 10 to travel. The traveling portion 13 is a caterpillar track, such as so-called Caterpillar (registered trademark) in the grass mower 10.

The working portion 14 is mechanically connected to the driving portion 12 via gears, etc., and is a portion that performs a mowing work by being supplied with driving force from the driving portion 12. The working portion 14 is a cutter that cuts grass by rotating a cutting blade in the grass mower 10. The refueling portion 15 stores fuel and supplies the stored fuel to the driving portion 12. The communication unit 16 has a wireless communication function and performs wireless communication with the remote controller 20. The communication unit 16 receives an operation signal (details will be described below) transmitted from the remote controller 20 and supplies the operation signal to the transmission unit 17.

The transmission unit 17 is a path for transmitting electrical signals and transmits the supplied operation signal to the operation control circuit 11. The operation control circuit 11 controls the operation of each portion (the driving portion 12, the traveling portion 13, and the working portion 14) based on the transmitted operation signal. At the same time, the operation control circuit 11 generates status information indicating an operation status of each portion, converts the generated status information into a signal, and transmits the signal to the remote controller 20 via the transmission unit 17 and the communication unit 16. The status information indicates, for example, a traveling speed, a traveling direction, and whether the working portion 14 is in operation or not.

The operation unit 21 has an operating lever, receives an operation of the grass mower 10 by the operator, and generates an operation signal indicating the received operation details. The operation of the grass mower 10 includes traveling forward and backward, turning left and right, turning on/off of the working portion 14, and the like. The communication unit 22 transmits an operation signal generated by the operation unit 21 wirelessly to the grass mower 10. The communication unit 22 receives the status information transmitted from the grass mower 10. The display panel 23 displays the received status information of the grass mower 10 (e.g., traveling, cutter in operation, or the like).

The explanation will be given with referring back to FIG. 1. The function adding device 40 can be mounted on various vehicles, not limited to the grass mower 10, and a mounting member that matches the shape of the vehicle is used. The support member 30 is a mounting member adapted to the shape of the grass mower 10. The support member 30 comprises a housing support portion 31 and an individual shape portion 32. The housing support portion 31 is a portion to which the function adding device 40 is fixed and has a common shape regardless of the vehicle to which the support member 30 is mounted. The individual shape portion 32 is a portion fixed to the vehicle and has a shape adapted to the individual vehicle. That is, the grass mower 10 comprises a main body of the grass mower 10 (work machine body) and the function adding device 40 in a state where the function adding device 40 is mounted. The function adding device 40 is configured to be detachable from the main body of the grass mower 10.

The function adding device 40 is a device that adds functions to the grass mower 10. The function adding device 40 adds an autonomous travel function to the grass mower 10 in the example of FIG. 1. The autonomous travel function allows the grass mower 10 to travel autonomously without the operator's operation. The function adding device 40 comprises a function adding circuit 41, a LiDAR 42, an imaging portion 43, a bypass unit 44, a wiring 45, a housing 46, first vibration-proof members 47, and a second vibration-proof member 48. In Section 2, the concept of the function adding circuit 41 and the bypass unit 44 combined is referred to as a "control circuit", and the function adding circuit 41 will be described as an example of the "control circuit".

The function adding circuit 41 is a circuit that implements functions to be added to the grass mower 10. The circuit is an electronic component in which an electric component is placed on a printed circuit board as well as the operation control circuit 11, and the circuit may include both electronic and electrical circuits. The function adding circuit 41 enables various functions to be added. The following describes a case in which an autonomous travel function is added to enable the grass mower 10 to travel autonomously without the operation of the remote controller 20.

A LiDAR 42 (Light Detection And Ranging) is a sensor that emits laser light and measures the distance to an object and its shape based on information from the reflected light. The LiDAR 42 is a 2D LiDAR (two-dimensional LiDAR) whose optical axis directions are on the same plane and emits laser light in 360-degree directions including front, back, left, and right. The imaging portion 43 is a digital camera that has a lens and an image sensor, etc. and that captures images represented by light reaching the image sensor. The function adding circuit 41 controls the autonomous travel of the grass mower 10 based on the measurement results by the LiDAR 42 and the images captured by the imaging portion 43.

The bypass unit 44 is electrically connected to the transmission unit 17 of the grass mower 10 via the wiring 45, and the bypass 44 is a circuit that diverts the signal transmitted by the transmission unit 17 so that the signal passes through the function adding circuit 41. The bypass unit 44 allows not only the operation signal supplied to the operation control circuit 11 but also the signalized status information generated by the operation control circuit 11 to pass through the function adding circuit 41.

The function adding circuit 41 returns the operation signal directly to the transmission unit 17 and supplies the signal to the operation control circuit 11. The function adding circuit 41 makes it possible to switch between a manual mode in which the grass mower 10 is manually operated and an automatic mode in which the grass mower 10 is automatically controlled by supplying a control signal that controls the operation of the grass mower 10 instead of the operation signal to the operation control circuit 11 via the transmission unit 17. The function adding circuit 41 converts an image for mode switching into a signal and transmits the signal to the remote controller 20 via the transmission unit 17 and the communication unit 16. The display panel 23 of the remote controller 20 displays an image for mode switching, allowing the operator to switch between the manual mode and the automatic mode. The switching between the manual mode and the automatic mode is not limited to the operation of the remote controller 20, but the switching may be performed, for example, by the operation of a physical switch (toggle switch, etc.) provided in the function adding device 40.

The housing 46 is a rectangular box-shaped member formed of a water-impermeable material such as metal or plastic, and the housing 46 has a top surface portion 64, four side portions 65, 66, and a bottom surface portion 63. The housing 46 stores the function adding circuit 41, the LiDAR 42, the imaging portion 43, and the bypass unit 44. The housing 46 has an insertion hole 61 in the top surface portion 64. The LiDAR 42 is fixed by being inserted into the insertion hole 61 so that a part of the LiDAR 42 is exposed to the external space, and the part exposed to the external space emits laser light.

The housing 46 is fixed to the housing support portion 31 of the support member 30 by the first vibration-proof members 47. Each of the first vibration-proof members 47 is a vibration-proof member having the performance of damping vibrations, such as a spring or rubber. Each of the first vibration-proof members 47 damps vibrations in any direction, including a right/left direction, a front/rear direction, and a vertical direction. The function adding circuit 41 is fixed to the housing 46 by the second vibration-proof member 48. The second vibration-proof member 48 is also a vibration-proof member having the performance of damping vibrations, such as a spring or rubber and damps vibrations in any direction, including a right/left direction, a front/rear direction, and a vertical direction.

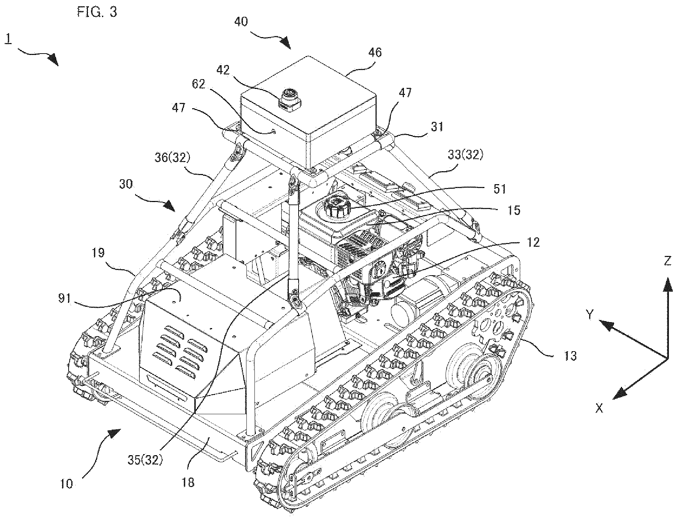

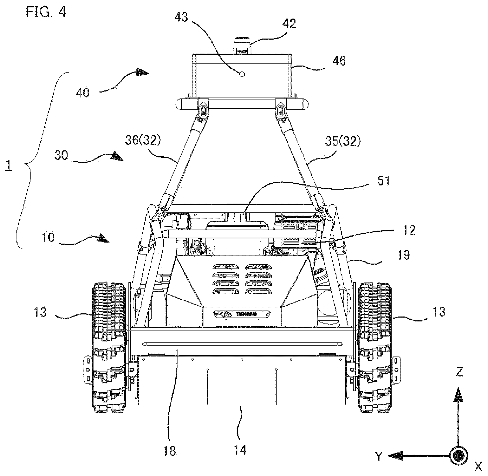

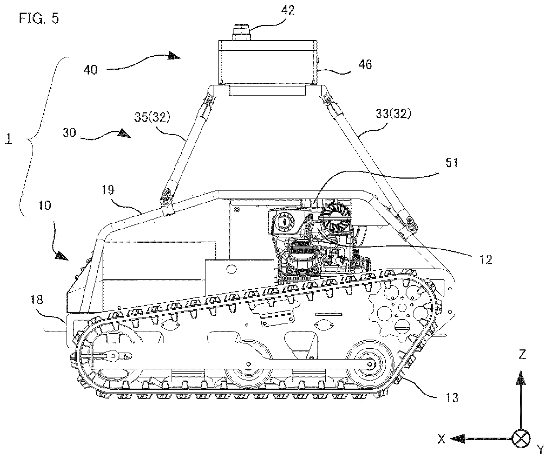

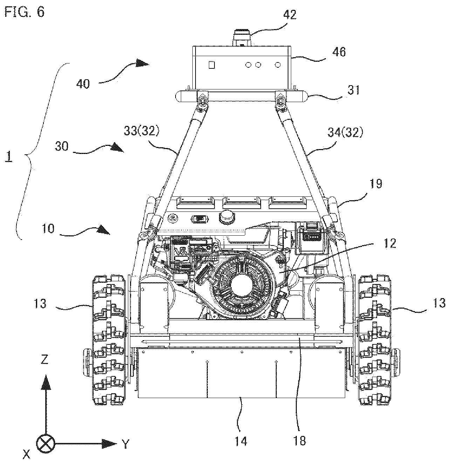

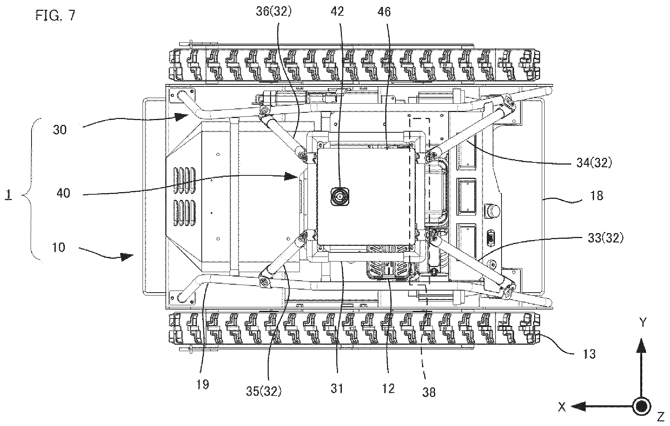

Then, the appearance of the vehicle system 1 is described with reference to FIG. 3 through FIG. 7. FIG. 3 is a perspective view of the vehicle system 1. FIG. 4 is a front view of the vehicle system 1. FIG. 5 is a side view of the vehicle system 1. FIG. 6 is a rear view of the vehicle system 1. FIG. 7 is a plan view of the vehicle system 1. In FIG. 3 to FIG. 7, the body of the grass mower 10 is not shown in the figures to clarify the explanation, and the inside of the grass mower 10 are shown visible.

In FIG. 3 to FIG. 7, the three-dimensional coordinate system is shown by arrows indicating an X-axis, a Y-axis, and a Z-axis, respectively. Hereafter, an X-axis direction, a Y-axis direction, and a Z-axis direction are referred to as the front/rear direction, the right/left direction, and the vertical direction, respectively. The grass mower 10 travels with a direction indicated by an arrow on the X-axis as the front direction. The grass mower 10 has a frame 18 and roll bars 19. The driving portion 12, the traveling portion 13, the working portion 14, and the refueling portion 15 and the like are mounted to the outside of the frame 18. The working portion 14 is mounted below the frame 18 so as to cut the grass that has crept under the grass mower 10.

Each of the roll bars 19 is fixed to the outside of the frame 18 by screws or the like. Each of the roll bars 19 is a part formed by joining pipes arranged so as to enclose the driving portion 12, refueling portion 15 and the like. The individual shape portion 32 having a leg portion 33, a leg portion 34, a leg portion 35 and a leg portion 36 is fixed to each of the roll bars 19. One end of each of the leg portions 33 to 36 is fixed to the roll bar 19, and the other end thereof is fixed to the housing support portion 31.

A function adding device 40 is mounted to the housing support portion 31. A wiring 45 shown in FIG. 1, which is arranged from the inside to the outside of the housing 46 of the function adding device 40, is routed to one of the leg portions 33 to 36. The space formed by the cover 91 stores the operation control circuit 11 and the transmission unit 17 shown in FIG. 1. The wiring 45 is arranged to the space formed by the cover 91 and is connected to the transmission unit 17 as shown in FIG. 1.

The function adding device 40 is mounted so as to be positioned vertically above a refueling port 51 of the refueling portion 15. The top surface portion 64 of the housing 46 is provided with the LiDAR 42. The front side portion 65 of the housing 46 is provided with an imaging hole 62 to allow light to enter the imaging portion 43. As shown in FIG. 6, the function adding device 40 is provided at a position that is higher than and away from the grass mower 10 by the individual shape portion 32. The vibration of the grass mower 10 during traveling is transmitted to the housing support portion 31 by the individual shape portion 32.

Here, the function adding device 40 comprises the housing 46 that is mounted on the grass mower 10, the function adding circuit 41 stored in the housing 46 to add a function to the grass mower 10, and the first vibration-proof members 47 provided between the housing 46 and the grass mower 10 to damp vibrations transmitted from the grass mower 10 to the housing 46. With the first vibration-proof members 47, the vibrations that has transmitted to the housing support portion 31 are greatly damped and transmitted to the housing 46. Thus, only damped vibrations are transmitted to the function adding circuit 41 inside the housing 46. According to such an aspect, it is possible to suppress a fault of a circuit to be retrofitted to a vehicle such as the function adding circuit 41 compared with the case where the first vibration-proof members 47 are not provided.

### Furthermore, the function adding device 40 comprises a sensor provided in the housing 46. In the example of FIG. 1, the function adding device 40 comprises the LiDAR 42, the imaging portion 43, and an IMU (Inertial Measurement Unit) that is not shown. The IMU includes a three-axis angular velocity sensor and a three-axis acceleration sensor and is configured to detect three-dimensional inertial motion of the grass mower 10. Then, the function adding circuit 41 implements a function to be added to the grass mower 10 (an autonomous travel function in the example of FIG. 1) by using the measurement results by those sensors. In the function adding device 40, the vibrations from the grass mower 10 are damped by the first vibration-proof members 47, thus also suppressing the vibrations of the LiDAR 42 and the imaging portion 43 compared with the case where the first vibration-proof members 47 are not provided. This makes it possible to suppress degradation in measurement accuracy due to the vibrations of the sensor.

### 2. Detailed configuration of the function adding device 40

Section 2 describes the more detailed configuration of the function adding device 40 according to the present embodiment. In Section 2, the function adding device 40 is described again from a different perspective than in Section 1, although some of the explanations overlap with Section 1.

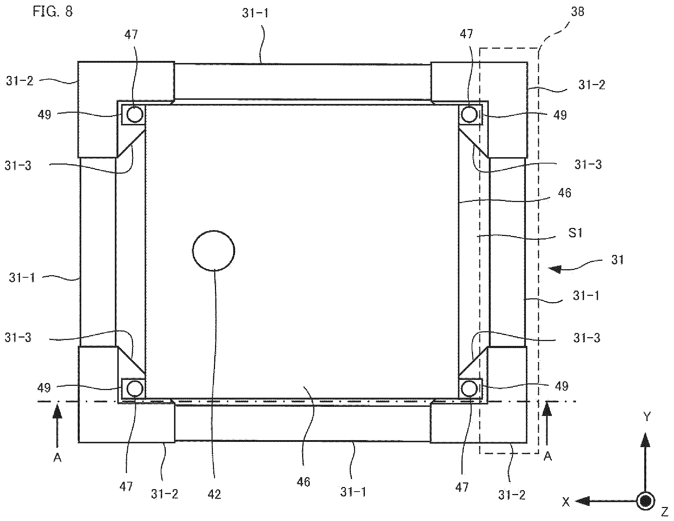

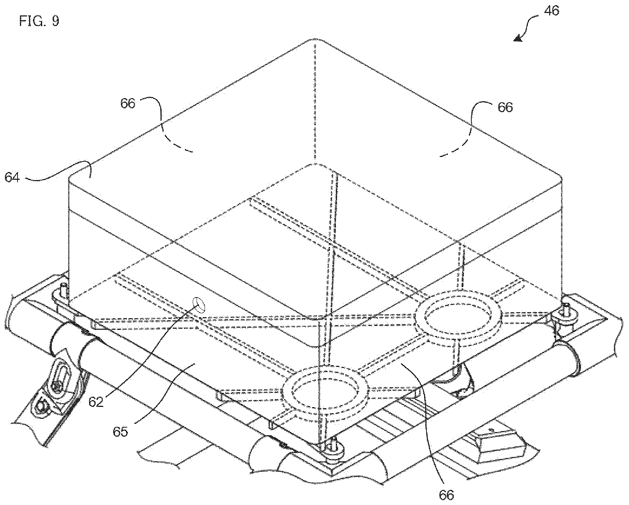

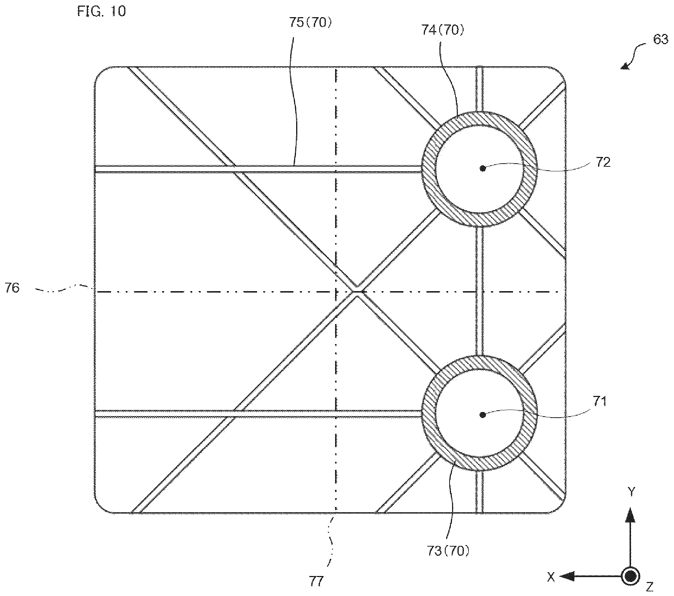

FIG. 8 is an enlarged view of the housing support portion 31 and the housing 46 viewed from above. FIG. 9 is a perspective view showing the appearance of the housing 46. FIG. 10 is a plan view showing the bottom surface portion 63 of the housing 46.

The function adding device 40 comprises the housing 46, the function adding circuit 41 (control circuit), the support member 30, the wiring 45, ribs 70, and a dustproof member 80.

The housing 46 has the top surface portion 64, one side portion 65, three side portions 66, and the bottom surface portion 63 in which hole portions 71, 72 are formed. FIG. 10 shows the bottom surface portion 63 of the housing 46. The top surface portion 64 has a quadrilateral shape in a plan view. The side portion 65 indicates a side portion in which the imaging hole 62 is formed, and the side portion 65 has a quadrilateral shape in a side view. Each of the side portions 66 indicates a side portion in which the imaging hole 62 is not formed, and each of the side portions 66 has a quadrilateral shape in a side view. The side portion 65 is arranged on the front side of the grass mower 10 in the housing 46 and is configured to enable the capturing by the imaging portion 43 through the imaging hole 62. The side portions 66 are arranged at the rear side, the left side and the right side of the grass mower 10 in the housing 46, respectively.

The hole portion 71 and the hole portion 72 are formed in the bottom surface portion 63. The hole portion 71 and the hole portion 72 are formed penetrating the bottom surface portion 63. The hole portion 71 and the hole portion 72 are holes for passing the wiring 45. The hole portion 71 is arranged to the left side of the center line 76 indicating the center of the bottom surface portion 63 in the right/left direction (Y-axis direction) of the grass mower 10. The hole portion 71 is arranged to the rear side of the center line 77 indicating the center of bottom surface portion 63 in the front/rear direction (X-axis direction) of the grass mower 10. In other words, the hole portion 71 is provided on the side of the leg portion 33 (a first leg portion) from the center of the bottom surface portion 63. The hole portion 72 is arranged to the right side of the center line 76. The hole portion 72 is arranged to the rear side of the center line 77. In other words, the hole portion 72 is provided on the side of the leg portion 34 from the center of the bottom surface portion 63. In the present embodiment, it is assumed that the wiring 45 passes through the hole portion 71.

The function adding circuit 41 is placed inside the housing 46. The function adding circuit 41 may be placed on the rib 70 formed on the bottom surface portion 63. In this case, the function adding circuit 41 may be placed on the rib 70 via the second vibration-proof member 48. The function adding circuit 41 is configured to perform a function for the grass mower 10. Here, the function added by the function adding circuit 41 may be a function of allowing the grass mower 10 to travel autonomously. As described in Section 1, the autonomous travel function allows the grass mower 10 to travel autonomously without the operator's operation.

The support member 30 has the housing support portion 31 and the individual shape portion 32 (a plurality of leg portions). The individual shape portion 32 comprises the leg portion 33, the leg portion 34, the leg portion 35 and the leg portion 36.

The housing support portion 31 is configured to support the housing 46. The housing support portion 31 has four pipe portions 31-1 and four corner portions 31-2. Each of the corner portions 31-2 is a member that fixes the pipe portions 31-1 in a position where each pipe portion 31-1 is inserted so as to be perpendicular to each corner portion 31-2. The pipe portions 31-1 fixed by the corner portions 31-2 and the corner portions 31-2 form a rectangular member (a member having a shape such a picture frame) with a hollow space S1 inside.

A plate portion 31-3 is formed at the hollow space S1 side of each of the corner portions 31-2, respectively. Each plate portion 31-3 is a portion for fixing the first vibration-proof member 47. The housing 46 has a square shape when viewed from above, and fixing portions 49 are each formed in the front/rear direction near each of four vertices of the function adding device 40. Each of the fixing portions 49 is a portion for fixing the first vibration-proof member 47.

The individual shape portion 32 is provided in a state of standing on the upper side of the grass mower 10. The individual shape portion 32 is configured to support the housing support portion 31. The leg portions 33 to 36 constituting the individual shape portion 32 are each a bar-shaped member (pipe). The leg portion 33 is a leg portion positioned at the left rear side of the grass mower 10. The leg portion 34 is a leg portion positioned at the right rear side of the grass mower 10. The leg portion 35 is a leg portion positioned at the left front side of the grass mower 10. The leg portion 36 is a leg portion positioned at the right front side of the grass mower 10.

The wiring 45 connects the transmission unit 17 of the grass mower 10 and the function adding circuit 41 via the hole portion 71. In more detail, the wiring 45 is directly connected to the bypass unit 44, however, for convenience of explanation, the wiring 45 shall be connected to the function adding circuit 41. The wiring 45 is arranged along the leg portion 33 (the first leg portion of the plurality of leg portions). In other words, the wiring 45 is routed from the function adding circuit 41 through the hole portion 71 along the leg portion 33, and the wiring 45 is further routed along the roll bar 19 to be connected to the transmission unit 17 of the grass mower 10. According to such an aspect, the wiring 45 is passed through the hole portion 71 provided at a position close to the leg portion 33, thereby reducing the exposed distance of the wiring 45. Thus, the probability of the wiring 45 being damaged during the mowing work or the like by the grass mower 10 can be reduced.

Each of the ribs 70 is arranged on the bottom surface portion 63 inside the housing 46. The ribs 70 includes a rib 73, a rib 74, and ribs 75. The rib 73 is arranged so as to surround the circumference of the hole portion 71. The rib 74 is arranged so as to surround the circumference of the hole portion 72. The ribs 75 are arranged so as to extend radially from the hole portion 71 or the hole portion 72. The ribs 70 may be made of the same material (metal or plastic) as the housing 46.

The ribs 70 formed on the bottom surface portion 63 can reinforce the strength of the bottom surface portion 63 that is reduced by the formation of the hole portions 71 and 72. With the rib 73 surrounding the circumference of the hole portion 71, especially the circumference of the hole portion 71 can be reinforced. Similarly, the rib 74 surrounding the circumference of the hole portion 72 can reinforce especially the circumference of the hole portion 72. With the ribs 75 extending radially from the hole portion 71 or the hole portion 72, the entire bottom surface portion 63 including the periphery of the hole portion 71 or the hole portion 72 can be reinforced.

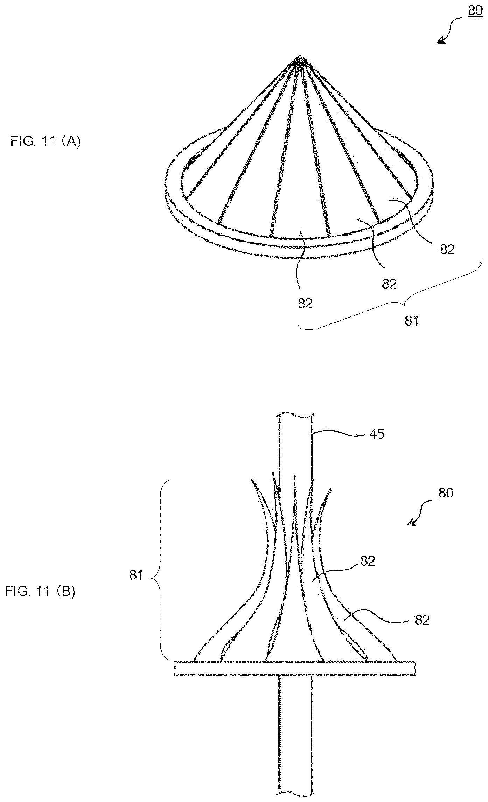

FIG. 11A and FIG. 11B show a configuration of a dustproof member 80, respectively. The dustproof member 80 is mounted to each of the hole portion 71 and the hole portion 72. The dustproof member 80 may be mounted from the outside of the housing 46 so as to block each of the hole portion 71 and the hole portion 72. The dustproof members 80 has a portion through which the wiring 45 can pass. The dustproof member 80 has a blocking portion 81 formed so as to block each of the hole portion 71 and the hole portion 72. The material of the dustproof member 80 may be, for example, rubber, and is preferably a flexible material with a large coefficient of friction. The dustproof member 80 can prevent dust from entering through each of the hole portion 71 and the hole portion 72 by the blocking portion 81.

The blocking portion 81 includes cut-in portions 82 that have been cut in radially. The tip of each of the cut-in portions 82 is configured to face upward in a state of being in contact with the wiring 45. Thus, the tip of each of the cut-in portions 82 is in contact with the wiring 45 in a state where the wiring 45 passes through the dustproof member 80. In this state, the dustproof member 80 is configured so that a reaction against the weight of the wiring 45 is generated by the blocking portion 81. In other words, the dustproof member 80 is configured to support the wiring 45 on which a vertically downward force acts due to vibrations while the grass mower 10 is in operation.

According to such an aspect, the wiring 45 passes through the hole portion 71 provided in the bottom surface portion 63, thereby reducing a vertically downward load acting on the wiring 45. This makes it possible to reduce the load acting on a connection portion of the wiring 45 and the function adding circuit 41.

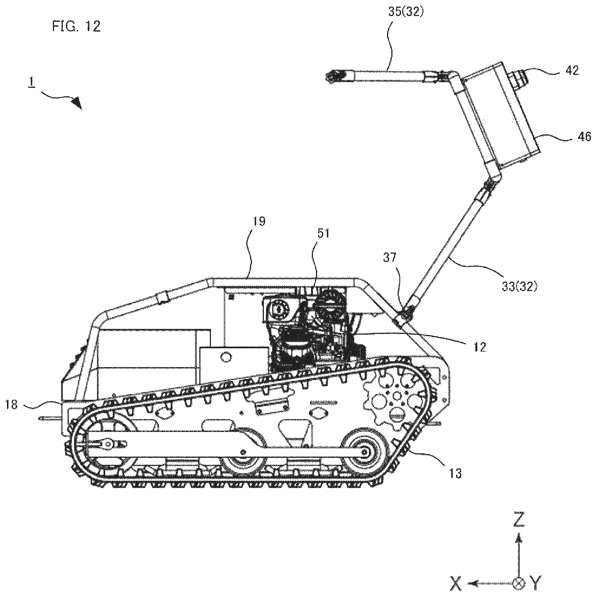

FIGs. 12 to 14 each shows an opening and closing mechanism of the function adding device 40. The housing support portion 31 is configured to be rotatable with any position of at least one of the legs portions of the individual shape portion 32 as a supporting point. That is, the opening and closing mechanism of the function adding device 40 is configured so that the housing 46 also rotates in conjunction with the rotation of the housing support portion 31. This makes it possible to avoid a situation in which the function adding device 40 gets in the way when refueling the grass mower 10. Hereinafter, the opening and closing mechanism of the function adding device 40 will be described.

A first opening and closing mechanism will be described below. As shown in FIG. 12, the housing support portion 31 is configured to be rotatable with a hinge 37 as a supporting point, which is provided at a connection portion with the roll bar 19 (a connection portion with the grass mower 10) in each of the leg portions 33 and 34. The hinge 37 is configured to be able to hold the housing support portion 31 in an open position of the housing support portion 31.

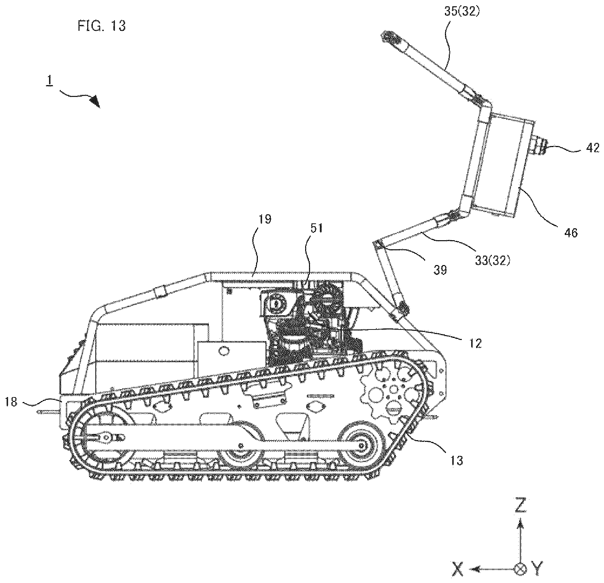

A second opening and closing mechanism will be described. As shown in FIG. 13, the housing support portion 31 is configured to be rotatable with a hinge 39 as a supporting point, which is provided at a substantially intermediate position in each of the leg portions 33 and 34. The hinge 39 is configured to be able to hold the housing support portion 31 in an open position of the housing support portion 31.

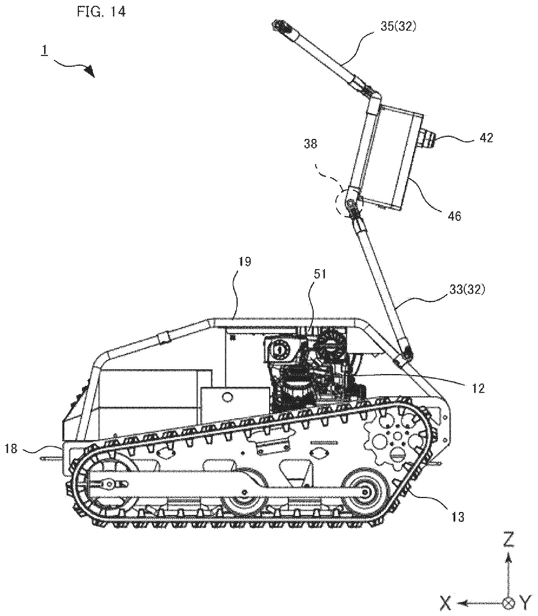

A third opening and closing mechanism will be described. As shown in FIG. 14, the housing support portion 31 is connected to the leg portion 33 (the first leg portion) and the leg portion 34 (the second leg portion) of the individual shape portion 32. The housing support portion 31 is configured to be rotatable about a shaft 38 (see FIGs. 7 and 8) connecting between the connection portion with the leg portion 33 and the connection portion with the leg portion 34. The shaft 38 is a shaft connecting the pipe portion 31-1 and the corner portions 31-2 on the rear side of the grass mower 10 in the housing support portion 31. The shaft 38 is configured to be able to hold the housing support portion 31 in an open position of the housing support portion 31 by an unshown holding mechanism (e.g., a hinge).

According to an aspect of the above-mentioned opening and closing mechanism, the housing 46 can be rotated with a simple configuration.

According to an aspect of the present embodiment, rain can be prevented from entering the housing 46 by arranging the hole portions 71 and 72 for passing the wiring 45 in the bottom surface of the housing 46, for example, even if it rains while the grass mower 10 is in operation. Thus, according to an aspect of the present embodiment, a waterproof property can be improved more economically than before.

Although the embodiments of the present disclosure have been described above, the present disclosure is not limited thereto and can be modified as appropriate without departing from the technical concept of the present disclosure.

### 3. Variation

In section 3, a variation of the present embodiment will be described.

In the present embodiment, the work machine has been described as a grass mower. However, the work machine is not limited thereto, and may be, for example, a chemical sprayer.

In the present embodiment, the work machine has been described as an unmanned machine. However, the work machine is not limited thereto and may be a manned machine. The manned machine is a work machine on which a person boards and a person manually operates.

The hole portion formed in the bottom surface portion 63 has been described as being formed at a position close to the first leg portion to which the wiring 45 is routed. However, the configuration is not limited thereto, and the hole portion may be formed at any position in the bottom surface portion 63.

The ribs 75 are arranged so as to extend radially to reinforce the entire bottom surface portion 63 in which the hole portion 71 and the hole portion 72 are formed, but the configuration is not limited thereto. For example, the ribs 75 may be arranged in a grid pattern throughout the bottom surface portion 63.

In the opening and closing mechanism of the function adding device 40, the supporting point of the rotation is provided to each of the two leg portions. However, the configuration is not limited thereto, and the supporting point of the rotation may be provided to only one leg portion.

The housing 46 is a rectangular box-shaped member, but the housing 46 may have any shape as long as the housing 46 is capable of storing the function adding circuit 41, the LiDAR 42, the imaging portion 43, and the bypass unit 44. For example, the housing 46 may be a cylindrical member.

### 4. Other

The present disclosure may be provided in each of the following aspects.
(1) A function adding device that adds a function to a work machine used outdoors, comprising: a housing including a top surface portion, side portions, and a bottom surface portion in which a hole portion is formed; a control circuit that is placed inside the housing and is configured to perform the function for the work machine; and a wiring that connects the work machine and the control circuit via the hole portion.
   According to such an aspect, it is possible to improve a waterproof property more economically than before by arranging the hole portion for passing the wiring in the bottom surface of the housing.
(2) The function adding device according to (1), further comprising: a support member having a housing support portion configured to support the housing, and a plurality of leg portions that is provided in a state of standing on an upper side of the work machine and is configured to support the housing support portion, wherein the wiring is arranged along a first leg portion of the plurality of leg portions, and the hole portion is provided on a side of the first leg portion from a center of the bottom surface portion.
   According to such an aspect, the wiring is passed through the hole portion provided at a position close to the leg portion, thereby reducing the exposed distance of the wiring.
(3) The function adding device according to (2), wherein: the housing support portion is configured to be rotatable with any position of at least one of the leg portions as a supporting point.
   According to such an aspect, it is possible to avoid a situation in which the housing gets in the way when refueling the work machine.
(4) The function adding device according to (2) or (3), wherein: the housing support portion is configured to be rotatable with a connection portion with the work machine in at least one of the leg portions as a supporting point.
   According to such an aspect, the housing can be rotated with a simple configuration.
(5) The function adding device according to any one of (2) to (4), wherein: the housing support portion is connected to the first leg portion and a second leg portion of the plurality of leg portions and is configured to be rotatable about a shaft connecting between a connection portion with the first leg portion and a connection portion with the second leg portion.
   According to such an aspect, the housing can be rotated with a simple configuration.
(6) The function adding device according to any one of (1) to (5), further comprising: a rib arranged on the bottom surface portion inside the housing.
   According to such an aspect, it is possible to reinforce the strength of the bottom surface portion that is reduced by the formation of the hole portion.
(7) The function adding device according to (6), wherein: the rib is arranged around the hole portion.
   According to such an aspect, especially the circumference of the hole portion can be reinforced.
(8) The function adding device according to (6) or (7), wherein: the rib comprises a plurality of ribs, and the plurality of ribs is arranged so as to extend radially from the hole portion.
   According to such an aspect, the entire bottom surface portion including the periphery of the hole portion can be reinforced.
(9) The function adding device according to any one of (1) to (8), further comprising: a dustproof member that is mounted to the hole portion and has a blocking portion formed so as to block the hole portion.
   According to such an aspect, it is possible to prevent dust from entering through the hole portion.
(10) The function adding device according to (9), wherein: the dustproof member is configured so that a reaction against the weight of the wiring is generated by the blocking portion.
   According to such an aspect, the wiring passes through the hole portion provided in the bottom surface portion, thereby reducing a vertically downward load acting on the wiring. This makes it possible to reduce the load acting on the connection portion of the wiring and the control circuit.
(11) The function adding device according to (10), wherein: the blocking portion includes cut-in portions that have been cut in radially, and a tip of each of the cut-in portions is configured to face upward in a state of being in contact with the wiring.
   According to such an aspect, it is possible to reduce the load acting on the connection portion of the wiring and the control circuit with a simple configuration.
(12) The function adding device according to any one of (1) to (11), wherein: the function is a function of allowing the work machine to travel autonomously.
   According to such an aspect, it is possible to add an autonomous travel function to the work machine.
(13) A work machine, comprising: a work machine body; and the function adding device according to any one of (1) to (12), the function adding device being configured to be detachable from the work machine body.
   According to such an aspect, the function adding device can be retrofitted to the work machine.
(14) The work machine according to (13), wherein: the work machine is an unmanned machine.
   According to such an aspect, the function adding device can be retrofitted to the unmanned machine.
(15) The work machine according to (13), wherein: the work machine is a manned machine.
   According to such an aspect, the function adding device can be retrofitted to the manned machine.
(16) The work machine according to any one of (13) to (15), wherein: the work machine is a grass mower.

According to such an aspect, the work machine can be suitably used for the grass mower.

Of course, the configuration is not limited thereto.

## Claims

1. A function adding device that adds a function to a work machine used outdoors, comprising:
a housing including a top surface portion, side portions, and a bottom surface portion in which a hole portion is formed;
a control circuit that is placed inside the housing and is configured to perform the function for the work machine; and
a wiring that connects the work machine and the control circuit via the hole portion.

2. The function adding device according to claim 1, further comprising:
a support member having
a housing support portion configured to support the housing, and
a plurality of leg portions that is provided in a state of standing on an upper side of the work machine and is configured to support the housing support portion, wherein:
the wiring is arranged along a first leg portion of the plurality of leg portions, and
the hole portion is provided on a side of the first leg portion from a center of the bottom surface portion.

3. The function adding device according to claim 2, wherein
the housing support portion is configured to be rotatable with any position of at least one of the leg portions as a supporting point.

4. The function adding device according to claim 2 or 3, wherein:
the housing support portion is configured to be rotatable with a connection portion with the work machine in at least one of the leg portions as a supporting point.

5. The function adding device according to any one of claims 2 to 4, wherein:
the housing support portion is connected to the first leg portion and a second leg portion of the plurality of leg portions and is configured to be rotatable about a shaft connecting between a connection portion with the first leg portion and a connection portion with the second leg portion.

6. The function adding device according to any one of claims 1 to 5, further comprising:
a rib arranged on the bottom surface portion inside the housing.

7. The function adding device according to claim 6, wherein:
the rib is arranged around the hole portion.

8. The function adding device according to claim 6 or 7, wherein:
the rib comprises a plurality of ribs, and
the plurality of ribs is arranged so as to extend radially from the hole portion.

9. The function adding device according to any one of claims 1 to 8, further comprising:
a dustproof member that is mounted to the hole portion and has a blocking portion formed so as to block the hole portion.

10. The function adding device according to claim 9, wherein:
the dustproof member is configured so that a reaction against the weight of the wiring is generated by the blocking portion.

11. The function adding device according to claim 10, wherein:
the blocking portion includes cut-in portions that have been cut in radially, and
a tip of each of the cut-in portions is configured to face upward in a state of being in contact with the wiring.

12. The function adding device according to any one of claims 1 to 11, wherein:
the function is a function of allowing the work machine to travel autonomously.

13. A work machine, comprising:
a work machine body; and
the function adding device according to any one of claims 1 to 12, the function adding device being configured to be detachable from the work machine body.

14. The work machine according to claim 13, wherein:
the work machine is an unmanned machine.

15. The work machine according to claim 13, wherein:
the work machine is a manned machine.
